# EUROPEAN PATENT APPLICATION

(11) **EP 4 311 255 A1**
(43) Date of publication of application: **24.01.2024**
(21) Application number: 22275098.6
(22) Date of filing: 20.07.2022
(51) Int. Cl.: H04Q 9/00, G08C 25/00, G05B 9/03, G06F 11/16, H04L 67/12

(54) **A CONTROL UNIT FOR MARITIME VESSEL**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A control unit for a maritime vessel configurable to monitor integrity of an operation and/or data used by a system of the maritime vessel. The control unit comprises: a first computing element configured to process a first input signal to generate a first output; and a second computing element configured to process a second input signal to generate a second output. The first computing element is configured to compare the first output with the second output, and if the first output and the second output do not match within a predetermined tolerance then the first computing element is configured to initiate and/or perform a preventive action.

## Description

### FIELD

The present invention relates to integrity monitoring and, in particular but not exclusively, to a control unit, a computing system and a method for monitoring integrity of an operation and/or data used by a system of a maritime vessel.

### BACKGROUND

A maritime vessel comprises with numerous systems that control and manage different functionalities of the vessel in various ways. For example, the systems may be used to control plant, such as engines, pumps, hydroplanes, valves, etc. of the vessel and used to monitor and report sensor information, such as liquid levels, pressures, temperature, fire, control valve positions, etc. of the vessel. These systems operate independently and/or dependently of each other depending on their designs. Existing systems of the maritime vessel tend to be simple in nature and not integrated in the effective and efficient manner. As these systems are often not designed from the start taking the safety requirements into account.

### SUMMARY

The invention is defined by the features of the appended claims.

According to an aspect of the invention there is provided a control unit for a maritime vessel configurable to monitor integrity of an operation and/or data used by a system of the maritime vessel. The control unit comprises: a first computing element configured to process a first input signal to generate a first output; and a second computing element configured to process a second input signal to generate a second output. The first computing element is configured to compare the first output with the second output, and if the first output and the second output do not match within a predetermined tolerance then the first computing element is configured to initiate and/or perform a preventive action.

In this way, the control unit monitors the data integrity. The data may be input data being received by the control unit or the output data transmitted from one of the computing elements of the control unit. The control unit also monitors its own operation, the operation of a localised system it communicates with or the operation of the overall system's operation. The control unit ensures that any of the operations being carried out does not affect data integrity of the data before performing the operations. The first output and the second output are cross compared. The second output is a similarly calculated value to the first output. Alternatively, the second output is the result of a monitor designed to check the correctness of the first output. In this way, the control unit eliminates any error in the system and avoid any undesirable malfunction in the system. This ensures that the security, integrity and availability of the vessel's systems.

Preferably the second computing element is configured to compare the second output with the first output, and if the first output and the second output do not match within the predetermined tolerance then the second computing element is configured to initiate and/or perform the preventive action.

In this way, the first output and the second output are cross compared by each of the computing elements of the control unit. Both the first computing element and the second computing element ensure that the integrity of the data and/or their operation has been maintained. In turn this ensures that the control unit prevents and eliminates any erroneous data being transmitted for usage by the systems of the vessel. The control unit ensure the integrity requirement of a receiving system is met.

Preferably if the first output and the second output match within the predetermined tolerance then the control unit is configured to transmit an output, wherein the output comprises at least one of: the first output, the second output, or both the first output and the second output.

The control unit transmits an output after a comparison of the first and second output have been completed to ensure that the output of the control unit maintains integrity that is needed by the systems of the vessel.

Preferably the first computing element is configured to transmit the first output; and wrap back the first output to the second computing element for a comparison. When the second computing element compares the second output with the transmitted first output; and if the second output and the transmitted first output do not match within the predetermined tolerance then the second computing element is configured to initiate and/or perform the preventive action. If the second output and the transmitted first output match within the predetermined tolerance, then the control unit outputs the second output.

In this way, the control unit checks whether the transmission of the first output meet the integrity requirement. Checking the transmitted first output against second output provides a more robust system.

Preferably the first input signal and the second input signal are originated from separate sources. Alternatively, the first input signal and the second input signal are originated from the same source.

In this way, the monitoring of an operation and/or data integrity of the system is carried out regardless of the origin of the input signals, ensuring that the integrity of the data is maintained for the system of the vessel. The necessary preventive action can be performed at the appropriate time.

Preferably, the predetermined tolerance is based on one or more of: data type, failure effect, intended use of the data and/or criticality of the data. The predetermined tolerance may comprise one or more of: a time period; a binary on or off; or a range of tolerance value.

Preferably, the preventive action comprises one or more of: providing a notification that is indicative of accumulated occurrence of errors; increasing value of a counter, wherein the counter is indicative of accumulated occurrence of errors; disabling transmission of an output of the control unit; transferring control over to another control unit; transferring control over to an alternative control system; providing degraded or limited functionality for users; providing a warning message to the users; monitoring and removing failed redundant input signals; and reporting status of the control unit and integrity of the operation and/or the data to the users.

In this way, the result of the integrity check done by the control unit can initiate and/or perform different preventive actions depending on at least one of: the integrity, security, availability or redundancy management requirements of the system. This ensures that the control unit can provide a flexible and robust mechanism to prevent critical error in the system of the vessel.

Preferably, the control unit provides meta data indicative of origin of data.

The meta data helps validating the integrity of the data. The use of meta data ensures that determinations of whether the data has been originated from the expected source and/or whether the data has been changed or corrupted since the data was formulated by the source.

Preferably, the control unit is configured to communicate with a user interface or a vehicle plant to receive and/or transmit data input and output. The communication may be bidirectional. The user interface may comprise a vehicle console. The control unit may be configured to communicate with an artificial intelligent user via the user interface.

Preferably, the control unit is configured to monitor and/or control a localised system of the maritime vessel.

Preferably, the control unit is configured to monitor and/or control an overall system of the maritime vessel.

According to an aspect of the invention there is provided a computing system for a maritime vessel. The computing system comprises one or more of the control units according to any one of the preceding paragraphs.

Preferably, the computing system comprises one or more high integrity control units. The one or more high integrity control units are configured to: perform the operation of the control unit as stated in the preceding paragraphs, communicate with the control unit that is configured to monitor and/or control the overall system, and monitor and/or control the localised system of the maritime vessel, such that the one or more high integrity control units provide data indicative of the localised system to the control unit.

The control unit that are used to monitor and/or control the overall system of the maritime vessel are provided with more computing power then the high integrity control units. In this way, the system for monitoring integrity may optimise computing power management, ensuring a more efficient and robust system.

Preferably, the computing system comprises one or more low integrity control units. The one or more low integrity control unit are configured to: receive a low integrity input signal, and transmit the low integrity input signal as a low integrity output to the control unit and/or the one or more high integrity control units.

A low integrity control unit provides a simplified form of control unit. By having different types of control units, in particular the simplified form along with the more complex control unit, the system may be designed more flexibly and cost efficiently. For example, using simplified form of control unit when a complex operation is not needed allows cost reduction during the manufacture and saving the processing cost and power cost are saved during the operation.

Preferably, the one or more low integrity control units are configured to: receive a command to display data from the control unit and/or the one or more high integrity control units, and initiate the display of data for a user interface.

Use of the low integrity control unit ensures that data processing and decision making can be minimised.

Preferably, the computing system comprises one or more alternative control systems. The one or more alternative control systems are configured to: communicate with the vehicle plant of the maritime vessel independent of the control unit and/or the one or more high integrity control units; and communicate with the vehicle console of the maritime vessel independent of the control unit and the one or more high integrity control units.

The independence of the alternative control systems ensures a high integrity, failure tolerant system. The independence between the control unit and the alternative control system ensures that if one of the control units fails then there is a backup system to continue providing full or partial functionality.

Preferably, the computing system and the one or more alternative control systems comprise of technologies independent of each other that are not common in design and/or in manufacture.

This prevents a common failure mode.

According to an aspect of the invention there is provided a computer-implemented method for monitoring integrity of an operation and/or data used by a system of the maritime vessel. The method comprises: processing, by a first computing element, a first input signal to generate a first output; processing, by a second computing element, a second input signal to generate a second output; comparing, by the first computing element, the first output with the second output, and initiating and/or performing a preventive action if the first output and the second output do not match within predetermined tolerance.

Preferably, the method comprises comparing, by a second computing element, the second output with the first output, and initiating and/or performing the preventive action if the first output and the second output do not match within predetermined tolerance.

Preferably, the method comprises transmitting an output. If the first output and the second output match within the predetermined tolerance, then transmit the output. The output comprises at least one of: the first output, the second output, or both the first output and the second output.

Preferably, the method comprises transmitting the first output and wrapping back the transmitted first output. The method comprises comparing, by the second computing element, the second output with the transmitted first output; and initiating and/or performing the preventive action if the second output and the transmitted first output do not match within predetermined tolerance.

Preferably, the preventive action comprises one or more of: providing a notification that is indicative of accumulated occurrence of errors; increasing value of a counter, wherein the counter is indicative of accumulated occurrence of errors; disabling transmission of an output of the control unit; transferring control over to another control unit; transferring control over to an alternative control system; providing degraded or limited functionality for users; providing a warning message to the users; monitoring and removing failed redundant input signals; and reporting status of the control unit and integrity of the operation and/or the data to the users.

Preferably, the method comprises monitoring and controlling a localised system of the maritime vessel.

Preferably, the method comprises monitoring and controlling an overall system of the maritime vessel.

Preferably, the method comprises receiving a low integrity input signal; and transmitting the low integrity input signal as a low integrity output.

Preferably, the method comprises activating an alternative control system. The alternative control system interlocks use high integrity data. The alternative control system monitors and/or controls a vehicle plant of the maritime vessel independent of a control unit. The alternative control system communicates with a user interface of the maritime vessel independent of the control unit.

In this way, if the system fails then there is a back-up control system. The alternative control system may provide full or limited functionality of the computing system and ensures that the necessary functions and systems of the vessel is operational. With this configuration a potential critical condition is avoided.

### BRIEF DESCRIPTION OF THE FIGURES

The invention will now be described by way of example only with reference to the figures, in which:
Figure 1 is a schematic diagram that illustrates a control unit according to the present invention;
Figure 2 is a schematic diagram that illustrates a low integrity control unit according to the present invention;
Figure 3 is a schematic diagram that illustrates a computing system according to the present invention;
Figure 4 is a schematic diagram that illustrates a computing system according to the present invention;
Figure 5 is a flow chart of a method for monitoring integrity of an operation and/or data used by a system of the maritime vessel according to the present invention; and
Figure 6 is a diagram of a maritime vessel comprising the computing system of the present invention.

### DETAILED DESCRIPTION

The present invention relates to high integrity, high availability, fault tolerant systems for a maritime vessel. The maritime vessel may be a surface or sub-surface vessel, such as a ship, a submarine, a platform etc. This system herein describes how the vessel functions may be integrated in a manner that meets the most stringent safety requirements, including options for fault tolerance such as common mode failures. In the following detailed description, references are made to the accompanying drawings that form a part hereof, and which are shown by way of illustration of specific configurations or examples. Referring now to the drawings, in which like numerals represent like elements throughout the several Figures. When describing common characteristic of the elements, the numerals are used even if they are represented with alphabet at the end. For example, the control units 4A, 4B and 4C are referred collectively as control unit 4 when describing the common characteristic of the control unit 4A-C.

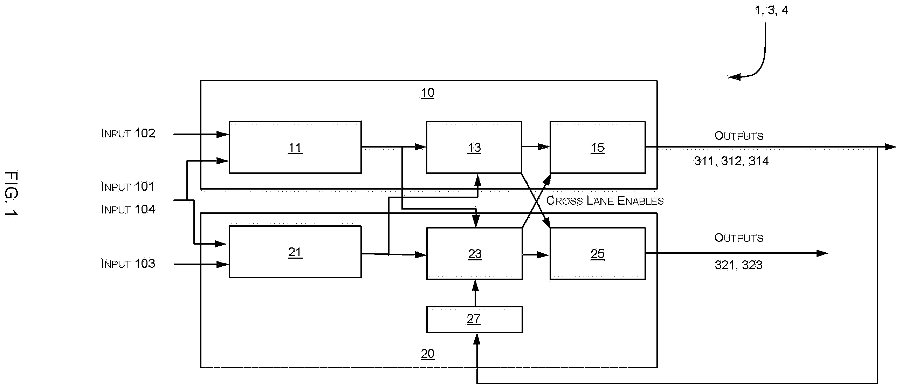

Figure 1 illustrates an example control unit 1, 3, 4 architecture according to the present invention. The control unit 1, 3, 4 for a maritime vessel is configured to monitor integrity of an operation and/or data used by a system of the maritime vessel. To monitor the integrity of the operation and/or data, the control unit 1, 3, 4 is configured to perform an integrity check. The integrity check comprises a cross comparison and/or a wrap back comparison for correctness. The integrity check is performed based on the integrity, security, availability, and redundancy management requirement of a receiving system. In the context of this invention, redundancy refers to inclusion of extra components or functions for providing alternative means of control. The control unit 1, 3, 4 is configured to prepare its output. The outputs that need to maintain high integrity status are copied to the other computing element so that each computing element can compare its own copy of the outputs with the outputs generated by the other computing element. If the data the control unit 1, 3, 4 receives and/or outputs need to be high integrity, then the control unit 1, 3, 4 performs the integrity check to maintain high integrity. Alternatively, or additionally, if the data need to be low integrity, the control unit 1, 3, 4 performs the integrity check that corresponds to the function the data are affecting. The control unit 1, 3, 4 comprises a first computing element 10 and a second computing element 20. The term 'computing element' also refers to 'lane' in a computer architecture. The first computing element 10 and the second element 20 can be referred as the first lane 10 and the second lane 20 respectively. The control unit 1, 3, 4 may comprise two or more computing elements. All the computing elements 10, 20 are physically and/or logically segregated. The computing elements 10, 20 of the control unit 1, 3, 4 are made with different technologies where required by the safety analysis.

Each of the computing elements 10, 20 of the control unit 1, 3, 4 comprises a processing function 11, 21, a cross-compare function 13, 23 and a transmit function 15, 25. Alternatively, or additionally the computing elements 10, 20 comprises a wrap back function 27. The wrap back function is only shown in relation to the second computing element 20 in Figures, but the first computing element may comprise a wrap back function.

The first computing element 10 is configured to receive a first input signal 101, 102 from a source. The second computing element 20 is configured to receive a second input signal 103, 104 from a source.

The first computing element 10 is configured to process a first input signal 101, 102 to generate a first output. The second computing element 20 is configured to process a second input signal 103, 104 to generate a second output. The first computing element 10 is configured to compare the first output with the second output. The second computing element 20 is configured to transmit a copy of the second output to the first computing element 10. The first computing element 10 receives the copy of the second output from the second computing element 20 for a comparison with the first output. The second output is copied from the second processing function 21 to the first cross-compare function 13. Alternatively, or additionally, the second computing element 20 is configured to compare the second output with the first output. The first computing element 10 is configured to transmit a copy of the first output to the second computing element 20. The second computing element 20 receives the copy of the first output from the first computing element 10 for a comparison with the second output. The first output is copied from the first processing function 11 to the second cross-compare function 23. The control unit 1, 3, 4 is configured to cross-compare the first output and the second output processed by the first computing element 10 and the second computing element 20. The cross-comparison results in the integrity check of the data and/or operation of the first computing element 10 and/or the second computing element 20. Consequently, the integrity of the data and/or operation of the control unit 1, 3, 4 is checked. The first computing element 10 and the second computing element 20 operates substantively simultaneously. A minor delay in performing the operations of the computing elements 10, 20 are allowed. The time allowed for the minor delay may be predetermined. The predetermined time allowance is such that it operates within any latency allowance for the operation of the control unit 1, 3, 4.

If the first output and the second output do not match within a predetermined tolerance, then the first computing element 10 or the second computing element 20 is configured to initiate a preventive action. Alternatively, or additionally, the first computing element 10 or the second computing element 20 is configured to perform the preventive action.

The predetermined tolerance is based on one or more of: data type, failure effect, intended use of the data and/or criticality of the data. The data may be analogue, discrete or digital. Alternatively, or additionally the predetermined tolerance comprises one or more of: a time period; a binary on or off; or a range of tolerance value. For example, if the value of the data (of the first output and the second output) is discrete then the predetermined tolerance comprises binary. This means that the comparison results from both the first computing element 10 and the second computing element 20 either matches (i.e., True) or not (i.e., False). In this example, the predetermined tolerance is based on data type. Alternatively, or additionally, the predetermined tolerance comprises a time period, such that the comparison result of the first computing element 10 and the comparison result of the second computing element 20 are produced in sequence. The time period may be 1 second, ½ second etc. This allows the computing elements 10, 20 to confirm their results in a more sensible manner and avoid any potential nuisance trips in the control unit 1, 3, 4. The time period may depend on the criticality of the data. If the first output and the second output relate to a signal indicative of value, such as voltage, current then the predetermined tolerance comprises the range of tolerance value. For example, if the difference of the values is within an allowable range, then the first output and the second output are considered to match. The allowable range may be provided as difference in amplitude and may include a time tolerance. If the first output and the second output relate to a high accuracy signal, then the tolerance may be small. This ensures that an erroneous signal is also detected by checking the integrity of the data and/or operation.

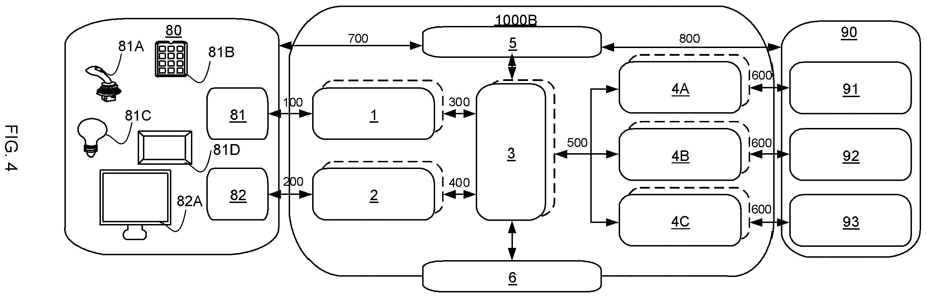

The preventive action comprises one or more of: providing a fault notification that is indicative of accumulated occurrence of errors; increasing value of a counter, wherein the counter is indicative of accumulated occurrence of errors; disabling transmission of an output of the control unit 1, 3, 4; transferring control over to another control unit 1, 3, 4; transferring control over to an alternative control system 5 (shown in Figure 4); providing degraded or limited functionality for users; providing a warning message to the users; monitoring and removing failed redundant input signals; and reporting status of the control unit 1, 3, 4 and integrity of the operation and/or the data to the users.

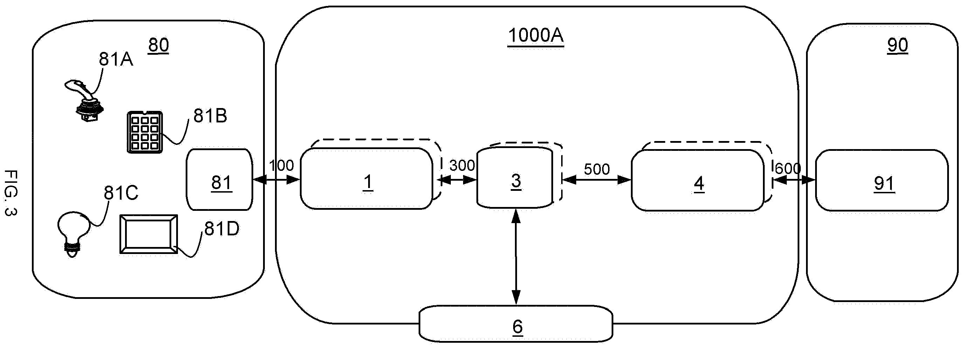

Additionally, the control unit 1, 3, 4 comprises a counter. The counter is indicative of the frequency of discrepancy in the data when a comparison was made by the first computing element 10 and/or the second computing element 20. The counter is incremental. A fault notification may comprise the counter. The control unt 1, 3, 4 is configured to increases the counter's value each time mismatch (e.g., False) has been determined by the comparison. This way, the control unit 1, 3, 4, and consequently the computing system 1000 (seen in Figure 3 and 4), allows some tolerance in the computing system 1000 before disabling the transmission and/or the operation of the control unit 1, 3, 4. The control unit 1, 3, 4 is configured to disable the transmission and/or the operation of the control unit 1, 3, 4 immediately or after a conformation period. The control unit 1, 3, ,4 is configured to transfer its control over to another control unit 1, 3, 4 or to an alternative control system 5 if the alternative control system 5 is installed. The control unit 1, 3, 4 is configured to provide degraded or limited functionality for the computing system 1000 and for the users of the computing system 1000. This ensures that the computing system 1000 of the vessel 2000 maintains some necessary functions until the computing system 1000 is recovered and/or the vessel 2000 is safely returned for repair. In certain situations, this provides limited control to the users over the systems of the vessel 2000. The control unit 1, 3, 4 is configured to provide a waring message to the users. The warning message deliver situational awareness to the users so that the user can take appropriate actions or simply just to let the user aware of the automatic measures being taken by the systems on the vessel 2000. The control unit 1, 3, 4 is configured to receive and/or monitor redundant input signals. The redundant input signals that fail the integrity check are removed. The control unit 1, 3, 4 is configured to monitor its own health. If the control unit 1, 3, 4 determines that it cannot perform its high integrity function correctly, then the control unit 1, 3, 4 disables its critical outputs. The control unit 1,3 ,4 is configured to maintain user notifications whenever possible. The first computing element 10 and the second computing element of the control unit 1, 3, 4 are prevented from transmitting critical outputs. The control unit 1, 3, 4 is configured to monitor health of various systems of the vessel 2000. The control unit 1, 3, 4 is configured to communicate with various systems of the vessel 2000. If the control unit 1, 3, 4 determines that any of the various systems cannot perform its high integrity function or transmits data that is considered to have lost its integrity then the control unit 1, 3, 4 reports the health and state of the various systems of the vessel 2000. The various systems may comprise one or more subsystems.

If the comparison made by the first computing element 10 determines mismatch with those of the second computing element 20, then the first computing element 10 initiates preventive action. In such case, the preventive action may be to terminate its own transmission and/or deactivate the first computing element 10 and any other computing elements, for example the second computing element 20, that use a cross lane enable signal of the control unit 1, 3, 4. This action prevents the control unit 1, 3, 4 from transmitting data which is likely to be corrupted and/or contain error. If the comparison made by the second computing element 20 determines mismatch with those of the first computing element 10, then the second computing element 20 initiates the preventive action. In such case, the preventive action may be to terminate its own transmission and/or deactivate itself and the any other computing elements, for example the first computing element 10, that use the cross lane enable signal of the control unit 1, 3, 4. The cross lane enable signal is transmitted between the first computing element 10 and the second computing element 20. The cross lane enable signal comprises activation and deactivation signal for transmission. These cross lane enable signal originates from the cross compare function 13, 23 of the computing elements when a comparison is complete.

If the first output and the second output match within the predetermined tolerance then the control unit 1, 3, 4 is configured to transmit an output. The output comprises at least one of: the first output 311, 312, 314, the second output 321, 323, or both the first output 311, 312, 314 and the second output 321, 323. Each of the first output 311, 312, 314 and second output 321, 323 is generated based on the inputs 101, 102, 103, 104. For example, the input 101 generates the first output 311 for the first computing element 10 and the second output 321 for the second computing element 20. Alternatively, or additionally, more than one input contribute to each output. The outputs that need to maintain high integrity status provide a copy to the other computing element so that each computing element can compare its own copy of the outputs with the outputs generated by the other computing element.

In a scenario, the first input signal 101 and the second input signal 104 are originated from a single source. Both the first input signal 101 and the second input signal 104 are processed by both the first computing element 10 and the second computing element 20. The error in one of the first processing function 11 or the second processing function 21 may be detected in the cross-compare function 13, 23, when the first output signal and second output signal are compared.

In another scenario, the first input signal 102 and the second input signal 103 are originated from separate sources. Each of the separate sources independently measures the same parameter. If there were four separate sources, two of which were fed into each lane, at least one of the sources in each lane may be considered redundant. Each source provides its own version of the same parameter. The first input signal 102 and the second input signal 103 do not need to be processed by both the first computing element 10 and the second computing element 20 because input signal 102 and input signal 103 represent the same parameter so that each computing element 10, 20 has its own copy of the same data. In this way, independence is maintained all the way to the sensor. The first computing element 10 receives and processes the first input signal 102 to generate the first output 312. The second computing element 20 receives and processes the second input signal 103 to generate the second output 323. The first output 312 and the second output 323 are based on redundant copies of the same input parameter (102, 103) and represent the same output parameter (312, 323).

In another scenario, the first computing element 10 is configured to transmit a first output 311, 312 and the second computing element 20 is configured to transmit a second output 321, 323. Each computing element of the control unit 1, 3, 4 transmits its own copy of the data. This allows a receiving system to perform the cross-comparison check.

The one or more control unit 1, 3, 4 is configured to communicate with a user interface, such as a vehicle console 80, or a vehicle plant 90 to receive and/or transmit data.

Alternatively, or additionally, the first computing element 20 is configured to transmit the first output 314; and wrap back the transmitted first output 314 to the second computing element 20 for a comparison. The second computing element 20 compares the second output with the transmitted first output 314. If the second output and the transmitted first output 314 do not match within the predetermined tolerance, then the second computing element 20 is configured to initiate and/or perform the preventive action. If the second output and the transmitted first output match within the predetermined tolerance then the control unit 1, 3, 4 maintains the cross lane enables so that the first computing element 10 can continue future transmission. This operation is referred to as a wrap back comparison. The comparison is made in the cross compare function 23 of the second computing element 20. The cross compare function 23 of the second computing element 20 compares the transmitted data by the first computing element 10 with the data the second computing element 20 expected to be transmitted. The second computing element 20 is configured to remove the cross lane enables to inhibit future transmissions by the first computing element 10. In this case, the prevention action is inhibition of the future transmission by the first computing element 10.

Alternatively, or additionally, the first computing element 10 performs the wrap back comparison (not shown in Figures). In this case, the second computing element 20 is configured to transmit the second output and wrap back the transmitted second output to the first computing element 10 for a comparison. The first computing element 10 compares the first output with the transmitted second output. If the first output and the transmitted second output do not match within the predetermined tolerance, then the first computing element 10 is configured to initiate and/or perform the preventive action. If the transmitted second output and the first output match within the predetermined tolerance then the control unit 1, 3, 4 maintains the cross lane enables so that the second computing element 20 can continue its transmission. The comparison is made in the cross compare function 13 of the first computing element 10. The first computing element 10 is configured to remove the cross lane enables to inhibit future transmissions by the second computing element 20. In this case, the prevention action is inhibition of the future transmission by the second computing element 20.

The inputs (e.g., the first input signal, the second input signal) and the outputs (e.g., the first output, the second output) may be analogue, discrete or digital type.

Additionally, the control unit 1, 3, 4 provides meta data. The meta data comprises an indication for an origin of the data the control unit 1, 3, 4 is handling. The meta data is applied to the transmissions of the control unit 1, 3, 4. Using the meta data, the control unit 1, 3, 4 determines whether the data being handled on a particular control unit 1, 3, 4 is originated from the expected source. The control unit 1, 3, 4 also determines whether the data has been changed or corrupted since the data was formulated by the source. The control unit 1, 3, 4 is configured to perform an integrity check before the transmission of the output. The integrity check is, as described above, using the first and second computing elements 10, 20. In this way, the control unit 1, 3, 4 makes sure correct data, including a portion of the meta data, are outputted, maintaining the high integrity nature of the data transmission.

The control unit 1, 3, 4 may be configured to monitor and/or control a localised system of the maritime vessel 2000. Alternatively, or additionally, the one or more control unit 3 is configured to monitor and/or control an overall system of the maritime vessel 2000. The systems of the maritime vessel 2000 may comprise a vehicle control system, a mission control system and/or a platform management system. As can be seen in Figures 3 and 4, the control unit 1, 4 dedicated to monitor and/or control the localised system is also referred to as a high integrity control unit 1, 4. The control unit 3 configured to monitor and/or control the overall system of the maritime vessel 2000 is also referred to as a system control unit 3. In the description the term "high integrity control unit" and "system control unit" are used when characteristics of a particular type (i.e., high integrity control unit or system control unit) of the control unit 1, 3, 4 needs to be clarified.

For controlling the localised system, a processing function 11 of the first computing element 10 is configured to compute a control function of the localised system and the second computing element 20 is configured to monitor whether the first computing element 10 performs correctly. The first computing element 10 is configured to transmit the first output comprising a control signal. Alternatively, or additionally a processing function 21 of the second computing element 20 is configured to compute the control function of the localised system and the first computing element 10 is configured to monitor whether the second computing element 20 performs correctly. In such case, the control unit 1, 3, 4 ensures that both the first computing elements 10 and second computing element 20 are in agreement within the predetermined tolerance. The high integrity control unit 1, 4 is configured to operate as a controller. The system control unit 3 is configured to have direct inputs and outputs 6 (shown in Figure 4) that are not processed through the high integrity control unit 1, 4 or the low integrity control unit 2. The system control unit 3 may be configured as such when the data is local to the system control unit 3 and/or based on safety, security or integrity requirement. This configuration minimises the number of transactions needed as the system control unit 3 is in direct communication with a local data source and/or a system.

The control unit 1, 3, 4 may comprise a third computing element (not shown in the Figures). The third computing element is configured to perform the same function as the first and second computing elements. The third computing element receives cross lane enable signals from the first computing element 10 and/or the second computing element 20. Having more computing element can provide a more secure, robust and failsafe system. However, the design of the system needs to balance the number of computing element with the consideration for the cost of manufacture and architectural complexities. Each of the computing elements of the control unit 1, 3, 4 is configured to receiving input, process the input, generate output, transmit the output, and/or wrap back the transmitted output for a comparison by another computing elements of the control unit 1, 3, 4. Each of the computing elements of the control unit 1, 3, 4 is configured to establish and/or remove cross lane enables to control transmission of another computing elements of the control unit.

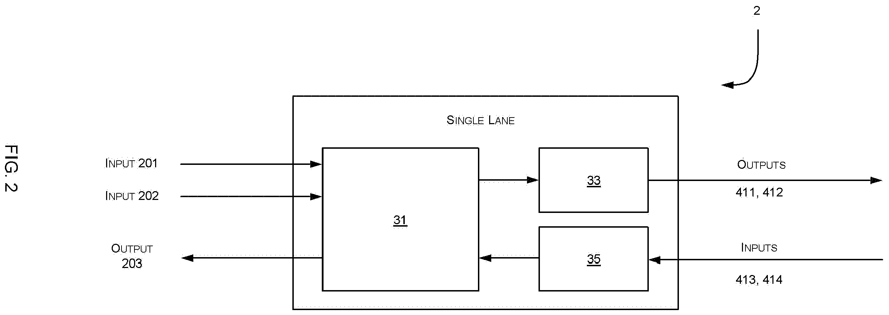

Figure 2 illustrates an example low integrity control unit according to the present invention. The low integrity control unit 2 is configured to receive a low integrity input signal 201, 202, 413, 414. The low integrity input signal 201, 202, 413, 414 may originate from the low integrity interface 82 or from the control unit 1, 3, 4. The low integrity control unit 2 is configured to transmit the low integrity input signal 201, 202 as a low integrity output 411, 412 to the system control unit 3 and/or the high integrity control unit 1, 4. The low integrity control unit 2 is configured to capture data from inputs 201, 202 and forward the data as outputs 411, 412. The data transfer may be carried out on a digital data bus.

Alternatively, or additionally the low integrity control unit 2 is configured to receive a command to display 413 data, for example on a particular page 414, from the system control unit 3 and/or the high integrity control unit 1, 4 and initiate the display of data on a screen. The output 203 is a video output sent by the low integrity control unit 2 for display. The low integrity control unit 2 is configured to communicate with one or more system control unit 3 and/or one or more high integrity control unit 1, 4. The low integrity control unit 2 may be configured to provide meta data.

The low integrity control unit 2 is used when the complexities of the high integrity control unit 1, 4 are not required to meet a safety objective. By design the low integrity control unit 2 comprises simple architecture minimising data processing and decision making in the low integrity control unit 2. Because of this simplicity, the low integrity control unit 2 makes error that are more likely to be fail obvious. For example, the low integrity input signal 201 may comprise a touch screen coordinate. The low integrity control unit 2 is configured to transmit the low integrity input signal 201 as output 411 without any knowledge on whether or not any action needs to be taken based on the touch screen coordinate. The low integrity control unit 2 does not need to know the type or parameter of the data (i.e., the low integrity input signal 201). The low integrity control unit 2 interfaces with low integrity data. The function of the low integrity control unit 2 is kept as simple as reasonably possible so the low integrity control unit 2 does not add uncertainty to the integrity of the data being processed. The low integrity control unit 2 comprises a processing function 31, a transmitting function 33, and a receiving function 35. Alternatively, or additionally, the control unit 1, 3, 4 is configured to capture low integrity control unit 2 data.

Figure 3 illustrates a computing system 1000A for a maritime vessel 2000 according to the present invention. The computing system 1000A comprises one or more control units 1, 3, 4. The one or more control units 1, 3, 4 is configured to receive input from a source. The source may be a high integrity source or a low integrity source. The source may be a user interface. The user interface comprises a vehicle console 80. The vehicle console 80 is a mechanism for capturing operator commands and displaying requested information. For example, the vehicle console 80 may comprise a high integrity source 81. The high integrity sources 81 is a high integrity interface, such as a control stick 81A, a keypad 81 B, a lamp 81C or a button 81D. The vehicle console 80 may comprise a low integrity source 82 (as can be seen in Figure 4). The low integrity source 82 is a low integrity interface, such as a touch screen 82A or a computer with a commercial operating system where no integrity claim is made. The operator commands are communicable by a human operator and/or machine-based operator. An artificial intelligence algorithm may be used. Alternatively, or additionally, the source is a vehicle plant 90. The vehicle plant 90 comprises all the functions 91, 92, 93 that need to be controlled and/or sensors that need to be monitored. The input signal from the vehicle plant 90 may comprise a mechanical input, a sensor input. For example, the vehicle plant 90 provides input from pumps, valves, dampers, starters 91, hydroplane actuators, engine controls 92, levels, status, sensors 93. The control unit 1, 3, 4 is configured to communicate 600 with the vehicle plant 90 bidirectionally.

The computing system 1000A comprises two or more high integrity control unit 1, 4. The computing system 1000A comprises two or more system control unit 3. There are at least one redundant high integrity control unit 1, 4 providing the same functionality as the high integrity control unit 1, 4 and/or redundant system control unit 3 providing the same functionality as the system control unit 3 available in the computing system 1000A. Alternatively, at least one redundant high integrity control unit 1, 4 providing the same critical functionality, with or without duplicating non-critical data, as another high integrity control unit 1, 4 and/or the redundant system control unit 3 providing the same critical functionality, with or without duplicating non-critical data, as the system control unit 3 available in the computing system 1000A. If there is a failure or error in one of the control units 1, 3, 4 then the redundant control unit 1, 3, 4 is used instead. In this way, the computing system 1000A maintains the integrity of its data and operation.

The high integrity control unit 1, 4 is configured to provide data indicative of the localised system to the system control unit 3. The high integrity control unit 1, 4 is configured to manage localised aspects of the systems within the vessel 2000. The localised system refers to an open or closed loop control of various systems within the vessel 2000. For example, the control loop comprises control of pumps, valves, dampers, starters 91, hydroplane actuation, engine 92, rudder positions, stabiliser positions, tank levels, status and sensors 93.

The system control unit 3 is configurable to manage all the functionality of the high integrity control unit 1, 4. The system control unit 3 is configured to manipulate input data through a series of complex algorithms to generate an output. The system control unit 3 may be configured to manage one or more of: vessel speed, heading, ballast and depth, bilge level, or other vehicle state. The system control unit 3 is configured to provide the status of the vessel to the users. The status of the vessel may comprise one or more of: redundancy management status, tank levels, valve positions, damper positions, bilge levels, electrical distribution status, alarm status data and/or other vehicle state. The system control unit 3 has access to the overall system of the vessel 2000 and manage the whole system. The system control unit 3 is configured to receive data from and/or transmit data to the high integrity control unit 1, 4.

Depending on the design of the control unit 1, 3, 4 and the computing system 1000 different preventive action is initiated and/or performed. The high integrity control unit 1, 4 is configured to initiate and/or perform the preventive action within the localised control loop. Alternatively, or additionally, the high integrity control unit 1, 4 is configured to receive instructing signal from the system control unit 3 to perform the prevention action. Alternatively, or additionally, the system control unit 3 is configured to initiate and/or perform the preventive action directly to relevant systems.

Figure 4 illustrates a computing system 1000B for a maritime vessel. Figure 4 illustrates an example of the computing system 1000B which comprises all the features and operations of computing system 1000A as illustrated in Figure 3.

Additionally, the computing system 1000B comprises the low integrity control unit 2 illustrated in Figure 2. The source may be the high integrity interface 80 and/or low integrity interface 82. The system control unit 3 is configured to communicate with a low integrity control unit 2. The system control unit 3 uses the low integrity control unit 2 as a monitoring function. In this way the low integrity control unit 2 does not directly affect the control function but provides some additional situational awareness. Alternatively, or additionally, the system control unit 3 is configured to predict valid inputs from the low integrity control unit 2. Alternatively, or additionally, the system control unit 3 is configured to augment the integrity of the input from the low integrity control unit 2. The data of the augmented input may be used to directly affect the control function.

Additionally, the computing system 1000B comprises an alternative control system 5. The alternative control system 5 is configured to communicate 700 with the vehicle console 80 of the maritime vessel 2000 independent of the system control unit 3 and/or the one or more high integrity control units 1, 4. The alternative control system 5 are configured to communicate 800 with the vehicle plant 90 of the maritime vessel 2000 independent of the system control unit 3 and/or the one or more high integrity control units 1, 4. The system control unit 3 is configured to communicate with the alternative control system 5. Alternatively, or additionally, the system control unit 3 is configured to communicate with one or more high integrity control units 1, 4. The system control unit 3 is configured to monitor the alternative control system 5 for determining correct functioning of the alternative control system 5. The system control unit 3 is configured to inform the health of the system control unit 3 to the alternative control system 5 so that the alternative control system 5 does not automatically activate inadvertently. The alternative control system 5 is configured to activate when the system control unit 3 fails completely and/or system control unit 3 is no longer able to control a critical function. The alternative control system 5 is configured to alert, via the vehicle console 80, if the system control unit 3 fails. The alternative control system 5 is configured to receive commands from the users and provide critical information to the users to enable them to continue the control of the vessel 2000. The vehicle console 80 may comprise a mechanism to manually engage the alternative control system 5 and/or to manually disengage the related control function in the system control unit 3. The system control unit 3 is configured to continuously provide situational awareness even if its control function has been disengaged.

Safety critical systems need to continue safe operation if there is a complete failure of the system control unit 3. The alternative control system 5 may comprise reduced capabilities compared to the system control unit 3. The alternative control system 5 is configured to provide critical controls needed to maintain safe operations.

The alternative control system 5 uses different technologies to the technologies of the system control unit 3. The different composition in the technologies of the alternative control system 5 and the system control unit 3 minimises a common mode failure affecting both the alternative control system 5 and the system control unit 3 simultaneously. The common mode failure refers to an incident where two components or portions of a system fail in the same way, having a common cause. The technologies refer to but not limited to design and composition of hardware and software of a component.

The alternative control system 5 is a simple control unit with high integrity interlocks. The alternative control system 5 processes like the low integrity control unit 2. The alternative control system 5 may be low integrity control unit 2. The high integrity interlocks may be a discrete based interlock. The alternative control system 5 may be configured to receive information from the high integrity control unit 1, 4. The high integrity control unit 1, 4 communicate with the alternative control system 5 even when the system control unit 3 is fully operational. In such case, the alternative control system 5 only receives information from the high integrity control unit 1, 4 and is prevented from controlling the system of the vessel 2000. If the control unit 3 fails, or loses control of a critical function, the high integrity interlocks are set to allow the alternative control system 5 to automatically take over control from the control unit 3. The interlocks control the nature of communication between the alternative control system 5 and the high integrity control unit 1, 3, 4. The interlocks manage when to allow the control command of the alternative control system 5 to become active. This ensures that there is only one control command generated for critical systems of the vessel 2000 such that the integrity of the data and/or the operation of the systems are maintained.

The alternative control system 5 is configured to operate when high integrity interlocks have been established. The alternative control system 5 is configured to terminate its control function when the high integrity interlocks are removed. The alternative control system 5 is unable to deactivate itself. In this way, the computing system 1000 is never left without a backup that can provide a control function of the system avoiding potential catastrophic failure.

Even though the description illustrates operations in a single unit, a component, the computing system 1000 may comprise one or more of type of the component. For example, the computing system 1000 may further comprise one or more low integrity control units 2, one or more low integrity interfaces 82, and/or one or more alternative control systems 5. The computing system's component types comprise the high integrity control unit 1, 4, the system control unit 3, the low integrity control unit 2, the alternative control system 5. The same kind of the components may provide the same functionality. In such case, the components that providing the same functionality may be composed of different technologies. In this way common mode failure is minimised.

Each of the system components are included in the computing system 1000 based on the vehicle control that needs to support the safety, integrity, security, availability or redundancy requirements. Each of the system components may be physically or logically integrated. For ease of understanding these components are described herein as separate functional units.

If the computing system 1000 has two or more of the control unit 1, 3, 4 which provides the same functionality then they can be interchangeably used to provide the functionality. If one of the control units 1, 3, 4 fails and/or is considered to be erroneous then another available control unit 1, 3, 4 may provide the functionality. Each of the system control unit 3 may handle the control of the system in a round robin manner. This makes sure that the health of each of the system control units 3 is regularly checked. The computing system 1000 is configured to use the system control unit 3 by prioritising the system control unit 3 with full functionality over other system control unit 3 with partial operated functionality (e.g., some functions of the other system control unit 3 had failed).

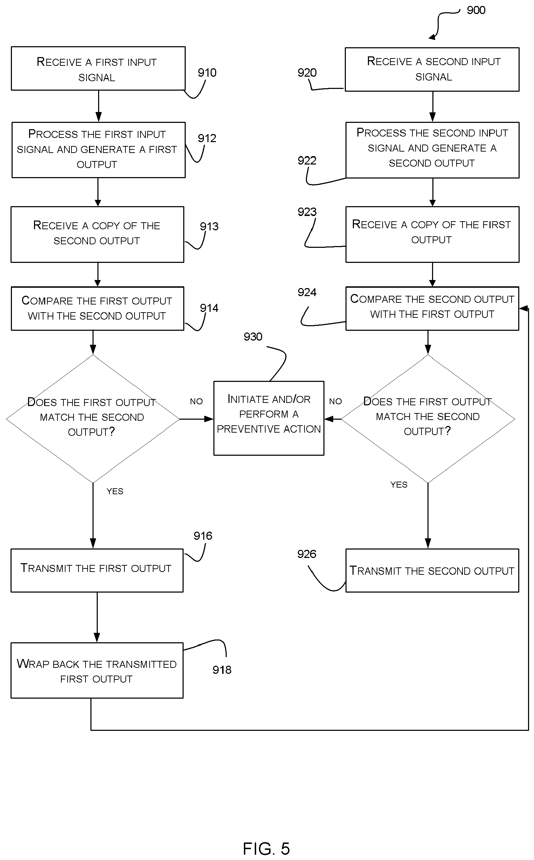

Figure 5, illustrate illustrates a flow chart of the operational steps of a method 900 for monitoring integrity of an operation and/or data used by a system of the maritime vessel 2000 according to the present invention. At step 910 a first input signal is received. At step 920 a second input signal is received. The first computing element 10 receives the first input signal and the second computing element 20 receives the second input signal.

At step 912 the first input signal is processed, and a first output is generated. A copy of the first output is then sent to the second computing element 20 for comparison at step 922. At step 922 the second input signal is processed, and a second output is generated. A copy of the second output is then sent to the first computing element 10 for comparison at step 912. The first computing element 10 processes the first input signal to generate the first output. The second computing element 20 processes the second input signal to generate the second output.

At step 913, the second output generated at step 922 is received, and at step 923 the first output generated at step 912 is received. The first computing element 10 receives a copy of the second output. The second computing element receives 10 a copy of the first output.

At steps 914 and 924, the first output and the second output are compared to determine whether the first output and the second output matches within a predetermined tolerance. At step 930, if it is determined that the first output and the second output do not match then a preventive action is initiated and/or performed. Each of the first computing element 10 and the second computing element 20 cross compares the first output and the second output and initiated and/or perform the preventive action if the integrity check has failed (e.g., determined that the first output and the second output do not match).

At step 916 the first output is transmitted. The first computing element 10 transmits the first output when the integrity check by cross comparison results in match (True). The control unit 1, 3, 4 transmits the first output as output. At step 926 the second output is transmitted. The second computing element 20 transmits the second output when the integrity check by cross comparison results in match (True). The control unit 1, 3, 4 transmits the second output as output.

At step 918 the transmitted first output is wrapped back. The transmitted first output is copied to the cross compare function 23 of the second computing element 20. The first computing element 10 wraps back the transmitted first output to the second computing element 20. The second computing element 20 compares the second output with the transmitted first output; and initiating and/or performing the preventive action if the second output and the transmitted first output do not match within predetermined tolerance. Similarly, the second output from step 926 could be wrapped back to step 914 (not shown in Figure 5) for computing function 13 to perform the integrity check.

The preventive action comprises one or more of: a notification that is indicative of accumulated occurrence of errors; increasing value of a counter, wherein the counter is indicative of accumulated occurrence of errors; disabling transmission of an output of the control unit 1, 3, 4; transferring control over to another control unit 1, 3, 4; transferring control over to an alternative control system 5; providing limited functionality for users; providing a warning message to the users; monitoring and removing failed redundant input signals; and reporting status of the control unit 1, 3, 4 and integrity of the operation and/or the data to the users.

Although not shown in Figure, the method comprises a step of monitoring and controlling a localised system of the maritime vessel 2000. Alternatively, or additionally, the method comprises a step of monitoring and controlling an overall system of the maritime vessel 2000. Additionally, the method comprises steps of receiving a low integrity input signal; and transmitting the low integrity input signal as a low integrity output.

Additionally, the method comprises a step of activating an alternative control system 5. The method comprises interlocking the alternative control system 5 with high integrity data. The method comprises a step of alternative control system 5 monitoring and controlling a vehicle plant of the maritime vessel independent of a control unit 1, 3, 4.

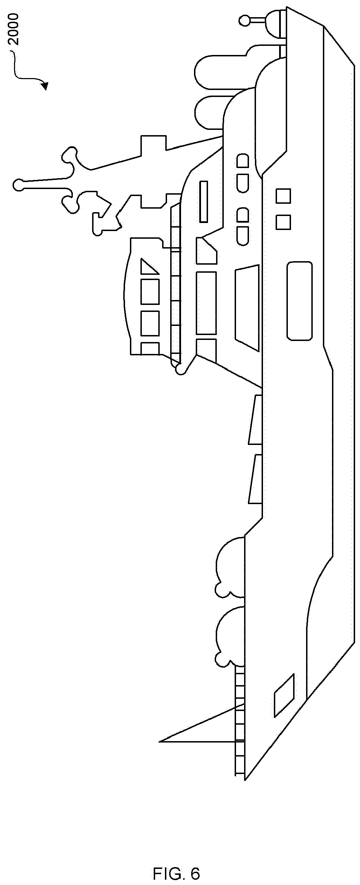

Figure 6 illustrates an example maritime vessel, which comprises the computing system 1000 of the present invention.

The systems, vehicle plants 90, vehicle console 80 described in Figures 3 and 4 are merely examples that may communicate with the computing system 1000 as claimed. The skilled person will be aware that other types and numbers of systems, vehicle plants components and vehicle console interfaces may be required or more relevant to the maritime vessel 2000.

The method described with relation to Figure 5 may be stored as instructions on a machine-readable medium. That when executed cause a processing means to perform the method of Figure 5.

## Claims

1. A control unit (1, 3, 4) for a maritime vessel configurable to monitor integrity of an operation and/or data used by a system of the maritime vessel (2000), comprising:
a first computing element (10) configured to process a first input signal to generate a first output; and
a second computing element (20) configured to process a second input signal to generate a second output;
wherein the first computing element (10) is configured to compare the first output with the second output, and if the first output and the second output do not match within a predetermined tolerance then the first computing element (10) is configured to initiate and/or perform a preventive action.

2. The control unit (1, 3, 4) according to claim 1 wherein the second computing element (20) is configured to compare the second output with the first output, and if the first output and the second output do not match within the predetermined tolerance then the second computing element (20) is configured to initiate and/or perform the preventive action.

3. The control unit (1, 3, 4) according to claim 1 or claim 2, wherein if the first output and the second output match within the predetermined tolerance then the control unit (1, 3, 4) is configured to transmit an output, wherein the output comprises at least one of: the first output, the second output, or both the first output and the second output.

4. The control unit (1, 3, 4) according to any one of the preceding claims, wherein the first computing element (10) is configured to:
transmit the first output; and
wrap back the transmitted first output to the second computing element (20) for a comparison,
when the second computing element (20) compares the second output with the transmitted first output; and
if the second output and the transmitted first output do not match within the predetermined tolerance then the second computing element (20) is configured to initiate and/or perform the preventive action.

5. The control unit (1, 3, 4) according to any one of the preceding claims, wherein the preventive action comprises one or more of:
providing a notification that that is indicative of accumulated occurrence of errors;
increasing value of a counter, wherein the counter is indicative of accumulated occurrence of errors;
disabling transmission of an output of the control unit (1, 3, 4);
transferring control over to another control unit (1, 3, 4);
transferring control over to an alternative control system (5);
providing degraded or limited functionality for users;
providing a warning message to the users;
monitoring and removing failed redundant input signals; and
reporting status of the control unit (1, 3, 4) and integrity of the operation and/or the data to the users.

6. The control unit (1, 3, 4) according to any one of the preceding claims, wherein the control unit (1, 3, 4) is configured to monitor and/or control a localised system of the maritime vessel (2000).

7. The control unit (3) according to any one of the preceding claims, wherein the control unit (3) is configured to monitor and/or control an overall system of the maritime vessel (2000).

8. A computing system (1000) for a maritime vessel (2000) comprising:
one or more of the control units (1, 3, 4) according to any one of the preceding claims.

9. The computing system according to claim 7 or claim 8, comprising:
one or more high integrity control units (1, 4), the one or more high integrity control units (1, 4) configured to:
perform the operation of the control unit as claimed in claims 1 to 6;
communicate with the control unit (3) as claimed in claim 7; and
monitor and/or control the localised system of the maritime vessel (2000), such that the one or more high integrity control units (1, 4) provide data indicative of the localised system to the control unit (3) as claimed in clam 7.

10. The computing system according to claim 8 or claim 9, comprising:
one or more low integrity control units (2), the one or more low integrity control unit (2) configured to:
receive a low integrity input signal; and
transmit the low integrity input signal as a low integrity output to the control unit (3) and/or the one or more high integrity control units (1, 4), and/or
one or more alternative control systems (5), the one or more alternative control systems (5) configured to:
communicate with the vehicle plant (90) of the maritime vessel (2000) independent of the control unit (3) and/or the one or more high integrity control units (1, 4); and
communicate with the user interface of the maritime vessel (2000) independent of the control unit (3) and the one or more high integrity control units (1, 4).

11. A computer-implemented method for monitoring integrity of an operation and/or data used by a system of the maritime vessel (2000), the method comprising:
processing (912), by a first computing element, a first input signal to generate a first output;
processing (922), by a second computing element, a second input signal to generate a second output;
comparing (914), by the first computing element, the first output with the second output, and
initiating and/or performing (930) a preventive action if the first output and the second output do not match within predetermined tolerance.

12. The computer-implemented method according to claim 11, comprising:
comparing (924), by a second computing element, the second output with the first output, and
initiating and/or performing (930) the preventive action if the first output and the second output do not match within predetermined tolerance.

13. The computer-implemented method according to claim 11 or claim 12, comprising:
transmitting (916) the first output;
wrapping back (918) the transmitted first output; and
comparing (924), by the second computing element, the second output with the transmitted first output; and
initiating and/or performing (930) the preventive action if the second output and the transmitted first output do not match within the predetermined tolerance.

14. The computer-implemented method according to any one of claims 11 to 13, comprising:
monitoring and controlling a localised system of the maritime vessel (2000), and/or an overall system of the maritime vessel (2000).

15. The computer-implemented method according to any one of claims 11 to 14, comprising:
receiving a low integrity input signal (200); and
transmitting the low integrity input signal as a low integrity output (400), and/or the method comprising:
activating an alternative control system (5), wherein the alternative control system interlocks use high integrity data; monitors and/or controls a vehicle plant of the maritime vessel (2000) independent of a control unit (1, 3, 4); and communicates with a user interface of the maritime vessel (2000) independent of the control unit (1, 3, 4).
